Europäisches Patentamt

European Patent Office

Office européen des brevets

(19)

(11) Publication number: **0 280 778**
**A2**

## (12) EUROPEAN PATENT APPLICATION

(21) Application number: **87118079.0**

(22) Date of filing: **07.12.87**

(51) Int. Cl.4: **F16J 15/18**

| | |
|---|---|
| The title of the invention has been amended (Guidelines for Examination in the EPO, A-III, 7.3). | (71) Applicant: **A. AHLSTRÖM CORPORATION PL 18 SF-48601 Karhula(FI)** |
| (30) Priority: **08.12.86 FI 864981** | (72) Inventor: **Fogh, Verner Engvaenget 6 DK-4622 Havdrup(DK)** |
| (43) Date of publication of application: **07.09.88 Bulletin 88/36** | (74) Representative: **Görg, Klaus, Dipl.-Ing. et al Hoffmann, Eitle & Partner Arabellastrasse 4 (Sternhaus) D-8000 München 81(DE)** |
| (84) Designated Contracting States: **DE FR GB SE** | |

(54) Cooling for a sealing arrangement.

(57) The invention relates to a new type of sealing arrangement for shaft sealing. The sealing arrangement is especially suitable for shaft sealing of centrifugal pumps pumping hot fluids or suspensions. The problem with pumping of hot fluids has always been the vaporization of hot fluids leaking past the shaft sealings, said vaporization being due to the reduction of pressure in the sealing area. This has caused drying of the sealing and breaking off of the lubrication diaphragm, which has resulted in burning of the sealing. The problem is solved by arranging a cooling ring (9) in the sealing area at the point where the leaking fluid tends to vaporize, said cooling ring being characterized in that it forms, together with a sealing cage (3), a closed ring space (15) connected with an inlet channel (10) and an outlet channel (11) for the cooling fluid. The cooling ring (9) cools the leaking fluid entering the clearance (14) so as to prevent later vaporization of said fluid.

FIG. 1

## Sealing arrangement

The present invention relates to a new type of sealing arrangement for rotating shafts. It is particularly suitable for shaft sealing of centrifugal pumps used for pumping of hot fluids.

Conventionally, many kinds of seals have been employed in pumps in order to prevent the pumping fluid from leaking in the direction of the shaft. All of these sealing types are characterized in that they require a small amount of water or other lubricating fluid onto their slide surfaces to prevent them from being heated and hardened or otherwise damaged by increased friction when they are dry. Therefore, the original design of these sealings is such that they slightly leak in order to secure proper lubrication. Mostly, the pumping fluid itself is suitable for a lubricant.

Use of a pumping fluid as a lubricant also brings about some risks. The temperature of such fluids in an over-pressurized state may well be over the boiling point at the normal pressure. When such fluid is pressed into sealing slots, the pressure will decrease and the fluid begin to vaporize, consequently burning the sealing due to the high temperature of said fluid and due to interrupted lubrication.

To eliminate such a danger, it is logical to attempt cooling of the fluid that penetrates the shaft seals in order to restrain its tendency to boil while the pressure is decreasing and to make it lubricate the sealing as desired. In principle, two different methods of cooling are known, i.e. direct cooling of a leaking fluid by means of mixing cold water with it and indirect cooling, in which the cooling fluid is circulated in a sealing cage by cooling both the sealings and the leaking fluid flowing in the slot between the shaft and the sealing cage.

US patent 4,498,681 discloses an example of direct cooling. In the arrangement disclosed in said patent, a spacing ring is disposed between the sealing elements which are cord packings, to which ring cold fluid is fed from outside, said fluid mixing with hot leaking fluid and cooling it, this preventing it from boiling in the area of the seals to follow. In practice, the spacing ring is mostly a metal or plastic ring, its cross section being H-shaped, and it has borings or equivalent openings arranged through its axial center ring, through which openings the cooling/lubricating fluid enters the shaft or the shaft sleeve. Such an arrangement has, however, some disadvantages, because the amount of fluid leaking from the pump shaft is greater and the shaft or the shaft sleeve may cool too much.

An alternative is cooling of the entire sealing cage, which most commonly is arranged by providing the sealing cage with a hollow space in either the flowing direction of the fluid before the sealings or in the area of sealings. The purpose of the arrangement is to keep the sealing cage cool enough to cool the fluid entered between the shaft and said sealing cage sufficiently to prevent it from boiling when the pressure has decreased in the sealing area. Cooling in the sealing area has to be highly efficient to really have an effect, through the sealings, on the fluid between the sealings and the shaft or between the shaft sleeves. Furthermore, the construction of this arrangement is exacting, and the manufacture of the hollow space in the sealing cage adds to the costs, thus increasing the manufacturing costs of the pump. It is also possible that the shaft will cool as well, which is not necessarily desirable because of the heat stresses and heat expansion.

To eliminate the disadvantages of the above-mentioned equipment known as prior art, the present invention introduces a sealing arrangement, which has a simple and economical construction and which is applicable to all sealings. A preferred embodiment of the invention is characterized in that, along with at least one sealing element is arranged a cooling ring, the outer periphery of which is sealed to the sealing cage.

Another preferred embodiment of the invention is characterized in that, between at least two sealing elements there is arranged a cooling ring, the outer periphery of which is provided with a ring space being tight relative to the shaft/shaft sleeve and the sealing cage.

The invention has the particular advantages that a separate cooling fluid is used and not the pumping fluid so that any appropriate fluid may be used, which does not necessarily have to possess lubricating properties and the number of necessary seals is reduced producing a sealing cage of simple construction. Further relevant features of the invention are described in the subclaims.

The sealing arrangement according to the invention is described below in greater detail with reference being made to the accompanying drawings, in which

Fig. 1 is a preferred embodiment of the sealing arrangement according to the invention,

Fig. 2 is another preferred embodiment of the sealing arrangement according to the invention, and

Fig. 3 is a third preferred embodiment of the sealing arrangement according to the invention.

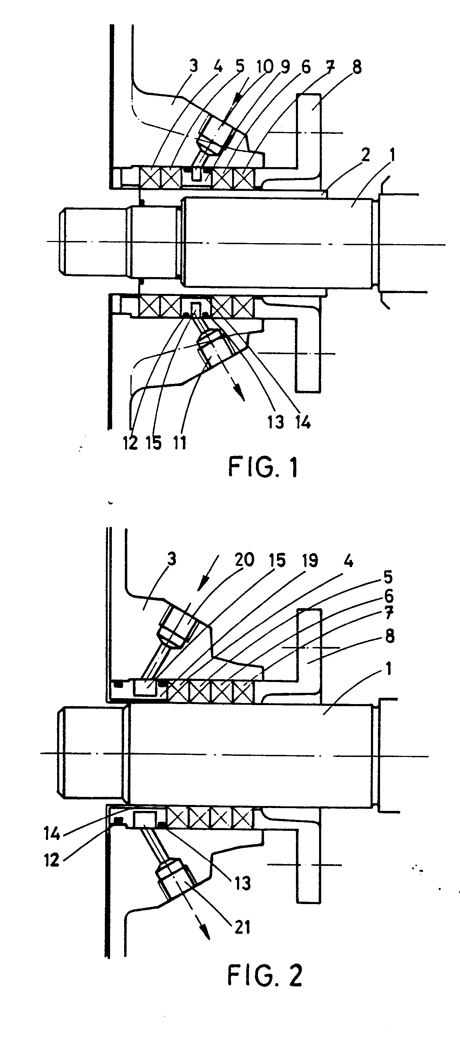

In accordance with Fig. 1, the drive end of the pump comprises a shaft 1, a shaft sleeve 2 rotating along with the shaft, a sealing cage 3, sealing rings 4 to 7, a tightening sleeve 8, a cooling ring 9 and inlet and outlet connections 10 and 11, said connections being preferably disposed vertically on the opposite sides of the shaft. According to Fig. 1, the cross section of the cooling ring 9 is preferably U-shaped and said ring is sealed with O-rings 12 and 13 to the sealing cage 3. There is a small clearance 14 between the cooling ring 9 and the shaft 1, into which clearance the fluid leaked through the sealings 4 and 5 is collected. Inside the cooling ring 9, there is a ring space 15, into which space the cooling fluid is fed from the connection 10 and wherefrom said cooling fluid is removed through the connection 11. In the example of Fig. 1, the cooling ring 9 is disposed between the sealing rings 5 and 6 because it has been established in trials that the pressure of the leaking fluid drops so much while said fluid is passing by two sealing rings that there is a risk of the fluid beginning to vaporize. In that case it is preferable to cool the leaking fluid to such an extent that it will no longer vaporize.

The embodiment in accordance with Fig. 2 deviates from the embodiment of Fig. 1 in, for example, that the cooling ring 19 is disposed before the sealings 4 to 7, in which case the cooling fluid connections 20 and 21 have correspondingly been transferred towards the impeller. Such an arrangement is applicable, for example, when the pumping fluid is hot and the pressure is not very high. The risk of vaporization of the fluid would, however, be involved. Therefore, it is safer to cool the leaking fluid already before the sealing area. Another difference is that there is no shaft sleeve on top of the shaft 1.

The arrangement of the invention functions in such a way that cooling fluid is fed to the ring space 15 of the cooling ring 9, 19 from the connections 10, 20. When the cooling fluid has circulated half a turn in the ring space 15, it is removed through the connections 11, 21. Access of the cooling fluid to the sealings 4 to 7 is prevented by O-rings 12 and 13. Thus, any appropriate fluid may be used as a cooling fluid because it will come into contact with neither the pumping fluid nor the sealings 4 to 7. The cooling fluid need not therefore have a lubricating property. While flowing in the ring space 15, the cooling fluid cools the ring 9, 19, which in turn receives heat mainly from the leaking fluid in the clearance 14 and to some extent from adjacent sealings 5, 6 and 4. Thus, the cooling effect of the ring 9 extends to the area of the sealing ring 5, whereby the cooling of the fluid begins already there.

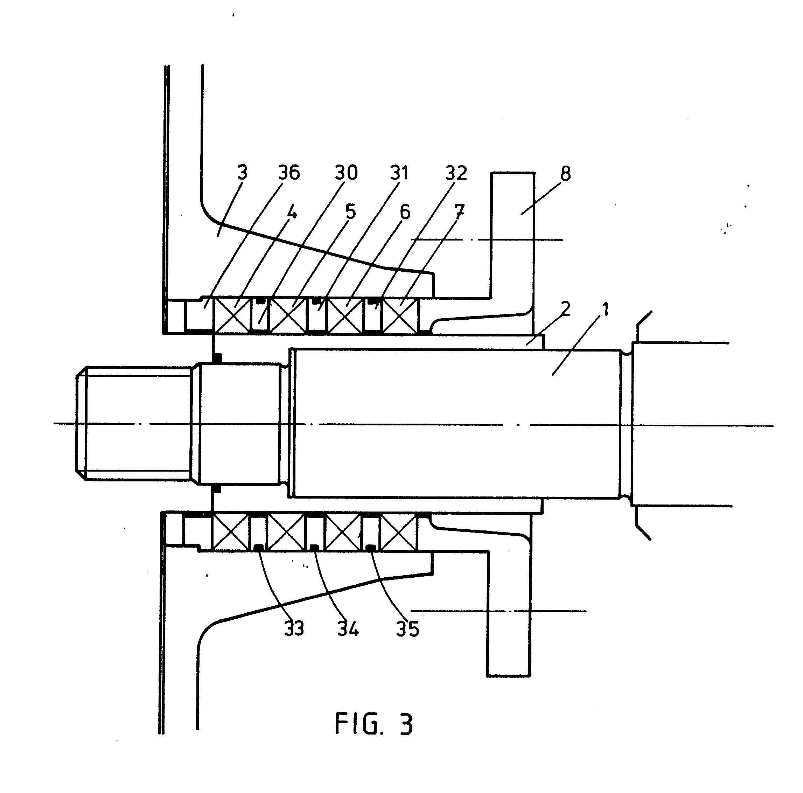

Fig. 3 illustrates a third embodiment of the invention, which comprises several cooling rings 30 to 32 that are disposed between the sealings 4 through 7. The cooling rings 30 to 32 are characterized in that they are solid, not provided with a hollow space, and conduct heat well and that their outer periphery is provided with a groove, in which is disposed the O-ring 33 to 35, which seals the cooling ring 30 to 32 to the sealing cage 3. It is also possible that the circumference of already the first ring 36 is sealed with an O-ring.

The arrangement of Fig. 3 functions in such a way that while a pressurized fluid is apt to penetrate the slots of both the outer and the inner peripheries of the sealings 4 to 7 as well as the radial slots, the slots are of the outer periphery and the radial slots are quickly filled so as to prevent the fluid from leaking past the sealings thanks to the O-rings. Thus, the only remaining leakage route is the slot between the sealings 4 to 7 and the sleeve 2. Thereby, the pressure of the leaking fluid is prevented from decreasing quickly and no vaporization of the fluid occurs. On the other hand, the cooling rings 30 to 32 form a splendid heat bridge between the third leakage route and the sealing cage, especially when the outer periphery of the cooling rings 30 to 32 is, through the fluid, connected to the sealing cage so that it conducts heat well. In this way the pressurized fluid cools efficiently and the amount of the leaking fluid is at the same time reduced. The number of necessary sealings is also cut down because there is only one leakage route i.e. the slot between the sealing and the shaft sleeve. The most important advantage achieved by the arrangement is a sealing cage of a simple construction (with no cooling connections).

As can be seen from the examples given above, the invention introduces an entirely new sealing arrangment, which eliminates the disadvantage of the equipment of the prior art and which is economical and calls for no special arrangements in the sealing cage or in other parts of the drive end of the pump. Furthermore, the sealing arrangement can be made adjustable by, for example, providing the shaft sleeve or the shaft with a temperature measuring system, which enables the optimization of the amount of cooling liquid. Correspondingly, the pump is adjustable to suit various operating conditions by arranging a cooling ring already at the manufacturing stage, to a desired shaft position relative to the sealings. It is also possible at the manufacturing stage to provide channels from the feed unit for several dispositions of the cooling ring, whereby many cooling rings can be used or lead the flow of the cooling fluid into one channel only by closing the other channels. At the outlet end, it is correspondingly possible to collect cooling fluid from several channels to one and the same connection.

The above description presents two preferred embodiments only, which are not intended to limit in any way the invention from what has been presented in the enclosed claims, which alone determine the scope of use and the extent of the invention. The reference numerals used in the claims are not intended to limit the scope of the claims and are provided merely as a guide to assist clarity of the claims.

## Claims

1. A sealing arrangement for shaft sealing, comprising one or more sealing elements (4 to 7) disposed around a shaft (1) or a shaft sleeve (2), and a sealing cage (3) surrounding said sealing elements, **characterized** in that, along with at least one sealing element (4 to 7) there is arranged a cooling ring (9, 19, 30 to 32), the outer periphery of said ring being sealed (33 to 35) to the sealing cage.

2. A sealing arrangement according to claim 1, **characterized** in that, along with at least one sealing element (4 to 7) there is arranged a cooling ring (9, 19), the outer periphery of which is provided with a ring space (15) being tight relative to the shaft (1)/shaft sleeve (2) and the sealing cage (3).

3. A sealing arrangement for shaft sealing, comprising sealing elements (4 to 7) disposed around the shaft (1) or the shaft sleeve (2), and a sealing cage (3) surrounding said elements, **characterized** in that a cooling ring (9) is disposed between at least two sealing elements (5 to 8), the outer periphery of said ring being provided with a ring space (15) which is tight relative to the shaft (1)/shaft sleeve (2) and the sealing cage (3).

4. A sealing arrangement according to claim 2 or 3, **characterized** in that at least one inlet connection (10, 20) for the cooling fluid leads to the ring space (15) and at least one outlet connection (11, 21) for said fluid leads out of it.

5. A sealing arrangement according to claim 2 or 3, **characterized** in that the cross section of the cooling ring (9, 19) is substantially U-shaped and that the cooling ring is sealed to the sealing cage (3) by means of sealing elements (12, 13) the outer peripheries of which are disposed on the opposite sides of the ring space (15).

6. A sealing arrangement according to claim 1, 2, or 3, **characterized** in that the inner diameter of the cooling ring (9, 19, 30 to 32) is slightly bigger than the outer diameter of the shaft (1)/shaft sleeve (2).

7. A sealing arrangement according to claim 2 or 3, **characterized** in that there are several cooling rings (9, 19) and that separate channels lead to their ring spaces (15) from connections (19, 11; 20, 21).

8. A sealing arrangement according to claim 1 or 2, **characterized** in that, the level through the centerlines of the connections (10, 11; 20, 21) also goes through the centerline of the shaft (2).

FIG. 1

FIG. 2

FIG. 3

0 280 778